Europäisches Patentamt

European Patent Office

Office européen des brevets

(19)

(11) Veröffentlichungsnummer: **0 010 198**
**B1**

(12) **EUROPÄISCHE PATENTSCHRIFT**

(45) Veröffentlichungstag der Patentschrift: **22.06.83**

(51) Int. Cl.³: **G 06 F 13/00**

(21) Anmeldenummer: **79103616.3**

(22) Anmeldetag: **24.09.79**

(54) **Vorrichtung zur Steuerung des Seitenaustausches in einem Datenverarbeitungssystem mit virtuellem Speicher.**

(30) Priorität: **23.10.78 US 954034**

(43) Veröffentlichungstag der Anmeldung:
**30.04.80 Patentblatt 80/9**

(45) Bekanntmachung des Hinweises auf die Patenterteilung:
**22.06.83 Patentblatt 83/25**

(84) Benannte Vertragsstaaten:
**DE FR GB**

(56) Entgegenhaltungen:
**DE - A - 2 227 882**
**DE - A - 2 629 311**
**DE - A - 2 641 722**
**GB - A - 1 487 078**
**US - A - 3 839 706**
**US - A - 4 053 948**
**US - A - 4 084 230**

**IBM Technical Disclosure Bulletin, Vol. 19, Nr. 1, Juni 1976, Seiten 83—84.**

(73) Patentinhaber: **International Business Machines Corporation**
**Armonk, N.Y. 10504 (US)**

(72) Erfinder: **Collins, Robert William**
**2404 NW 4 Ave**
**Rochester, MN 55901 (US)**
Erfinder: **Hoffman, Roy Louis**
**RR 2**
**Pine Island, MN 55963 (US)**
Erfinder: **Loen, Larry Wayne**
**2203 NW 17 Ave**
**Rochester, MN 55901 (US)**
Erfinder: **Mitchell, Glen Robert**
**RR 1**
**Pine Island, MN 55963 (US)**
Erfinder: **Soltis, Frank Gerald**
**2804 Mayowood Hills Dr., SW**
**Rochester, MN 55901 (US)**

(74) Vertreter: **Möhlen, Wolfgang C., Dipl.-Ing.**
**Säumerstrasse 4**
**CH-8803 Rüschlikon (CH)**

Courier Press, Leamington Spa, England.

**0 010 198**

Vorrichtung zur steuerung des seitenaustausches in einem datenverarbeitungssystem mit
virtuelle speicher

Technisches Gebiet

Die Erfindung wird in einem Datenverarbeitungssystem verwendet, das einen in Seiten unterteilten Virtuell-Speicher aufweist. Insbesondere bezieht sich die Erfindung auf die Koordination des Seitenaustauschs, wenn die zentrale Verarbeitungseinheit und die Eingangs-Ausgangsgeräte einen gemeinsamen Addressübersetzer mit Seitenverzeichnis benützen.

Stand der Technik

In einer Datenverarbeitungsanlage mit virtuellem Speicher veranlasst jeder Hinweis auf Daten oder Instruktionen, die nicht im Hauptspeicher stehen, die Uebertragung eines Blocks bestimmter Grösse, auch als Seite bezeichnet, aus einem Sekundärspeicher in den Hauptspeicher. Um in Hauptspeicher Platz für die neue Seite zu schaffen, muss ein anderer Datenblock in den Sekundärspeicher zurückübertragen werden. Ein Austausch-Algorithmus wählt die zurück zu übertragende Seite aus. Ueblicherweise werden dabei die am längsten unbenützten Seiten zurückübertragen. Die folgende Darlegung bezieht sich nur auf die Uebertragung von Seiten zwischen zwei Speicherebenen, dem Haupt- und dem Sekundärspeicher; die Grundidee ist jedoch anwendbar auf Speicherhierarchien mit mehreren Ebenen, wie Puffer, Hauptspeicher, Platte, Archivspeicher. Wird in einem Mehrebenensystem eine Seite für längere Zeit nicht benützt, so wird sie entlang der Hierarchie nach und nach in die langsamste Ebene übertragen.

Der Algorithmus, der die am längsten nicht benützte Seite Zurücküberträgt, ist in den meisten Fällen anwendbar. Die zuletzt benützten Daten stehen im schnellen Hauptspeicher zum unmittelbaren Zugriff bereit und die weniger benützen Daten stehen im langsameren Sekundärspeicher. Es gibt jedoch Situationen, in welchen gewisse Daten und Instruktionen auf gewissen Seiten unmittelbar im Hauptspeicher bereit stehen müssen, unabhängig davon, wie häufig sie benützt werden. So müssen z.B. Datenpuffer für gewisse schnelle Eingangs-Ausgangsgeräte im Hauptspeicher stehen. Muss ein Teil des Puffers erst aus einem langsamen Speicher geholt werden, nachdem eine Datenübertragung angefangen hat, so kann sich ein Ueberlauf ergeben, weil der notwendige Puffer nicht rechtzeitig zur Verfügung steht. Es kommt auch vor, dass gewisse Programmroutinen, sogenannte Terminprogramme, im Hauptspeicher zur Verfügung stehen müssen, weil sie innerhlab einer gewissen Zeit ablaufen müssen, um Unheil zu verhüten. So kann bei Prozesssteuerungen die Zeit, um eine Seite aus dem Sekundärspeicher zu holen, unerträglich lang sein. Auch in anderen Fällen ist es wünschbar, gewisse wichtige Instruktionen oder Daten stets im Hauptspeicher bereit zu halten.

Es gibt verschiedene Methoden, um sicherzustellen, dass eine Daten- oder Instruktionsseite im Hauptspeicher stehen bleibt, d.h. festgehalten wird. Die übliche Art, dies zu erreichen, besteht darin, einen Teil des Hauptspeichers für die Seiten, die nicht übertragen werden dürfen, zu reservieren und jeden Uebertragungsversuch zu blockieren. Das geht gut, solange der reservierte Teil nicht zu gross ist und sich nicht verändert. In einer Anlage mit zahlreichen Programmen hängen die Seiten, die im Hauptspeicher festzuhalten sind, von den auszuführenden Aufgaben ab. Ein genügend grosser Teil des Speichers kann nicht reserviert werden, um all diese Seiten für alle Aufgaben aufzunehmen, weil dadurch der ganze Hauptspeicher besetzt würde. Es muss daher darüber gewacht werden, welche Seiten festzuhalten sind und wann eine Seite Zurückübertragen werden kann. Eine Methode für die dynamische Steuerung des Festhaltens und Zurückübertragens von Seiten wurde beschrieben in "Minimizing Input/Output Page Pinning in a Virtual Storage Data Processor" von J. K. Boggs, jun., in IBM Technical Disclosure Bulletin, Band 19, Nr. 1, Juni 1976, Seiten 83—84. In der beschriebenen Anordnung wird ein spezieller Virtuell-Adressenumformer für jeden Eingangs-Ausgangskanal benützt, wobei in einer Adressübersetzungstabelle getrennt nach E/A-Kanälen und Seiten ein Festhalten von Seiten angezeigt wird. Jedoch muss durch das Betriebssystem eine Auswertung der Einzelanzeigen, die von der Eingangs-Ausgangsseite her gesetzt werden könne, vorgenommen werden, um eine Gesamtanzeige pro Seite zu erhalten. Bei Freigabe einer Seite von einem Kanal her muss wieder das Betriebssystem eingreifen, um die Gesamtanzeige gegebenenfalls zu korrigieren. Das ist relativ aufwendig.

Bei einer anderen Art der Seitenaustauschsteuerung, die im USA-Patent 3,839,706 beschrieben ist, kann in einem für die E/A-Kanäle bestimmten Adressübersetzer durch einen Benutzungszählwert jede Seite festgehalten werden. Jedoch ist eine Weitergabe des Gesamtzustandes pro Seite an die Zentraleinheit nötig. Für die Adressübersetzung und die Festhalteinformation sind also besondere, den E/A-Kanälen zugeordnete Einrichtungen nötig, während die Adressübersetzung für die Zentraleinheit in davon getrennten Einrichtungen separat vorgenommen wird.

Aus der deutschen Offenlegungsschrift 2,641,722 sind auch Einrichtungen zur Adressübersetzung bei virtueller Adressierung bekannt. Hier kann in Tabelleneinträgen auch ein Bit gesetzt werden, um eine Benutzung der betreffenden Seite durch ein E/A-Gerät zu kennzeichnen. Jedoch erfolgt hier das Setzen der Benutzungsbits schrittweise, teils durch das Betriebssystem und teils durch die Uebersetzungseinrichtungen. Beim Freigeben einer Seite muss nach dem Setzen eines Freigabebits erst ein Suchvorgang erfolgen, um die Benutzungsinformation an anderen Stellen

**0010198**

nachzuführen. Hierbei können Uebergangszustände verbleiben, in denen die Benutzungsinformation nicht überall gleich angezeigt wird.

Bei allen bekannten Anordnungen wird eine Benutzungsinformation zum Festhalten der Seiten entweder nur für E/A-Einheiten oder nur für die Zentraleinheit, oder jedenfalls getrennt für beide geführt.

Der Erfindung liegt die Aufgabe zugrunde, eine Vorrichtung zur Steuerung des Seitenaustausches anzugeben, bei der sowohl von E/A-Einheiten als auch von der Zentraleinheit eine Belegungsanzeige zum Seitenfesthalten erfolgen kann, und zwar in koordinierter Weise, so dass sich eine gemeinsame und eindeutige Anzeige ergibt.

Durch eine solche koordinierte Belegungsanzeige wird es ausgeschlossen, dass nicht-eindeutige Zwischenzustände entstehen, in denen eine gerade noch benutzte Seite schon freigegeben oder auf eine schon freigegebene Seite noch zugegriffen wird. Eine Möglichkeit, auch durch die Zentraleinheit Seiten festzuhalten und freizugeben, ist z.B. erwünscht bei Anwendungen im Realzeitbetrieb, bei dem während bestimmter Zeiten Programmteile unbedingt zur Verfügung stehen müssen und ein eventuell notwendiger Seitenaustausch nicht tolerabel ist.

Die Erfindung, mit der eine solche koordinierte und gemeinsame Seitenaustauschsteuerung erreicht werden kann, ist im Patentanspruch 1 gekennzeichnet. Vorteilhafte Ausgestaltungen der Erfindung sind in den abhängigen Ansprüchen dargestellt.

Durch die Erfindung ergibt sich auch infolge der für die E/A-Geräte und die Zentraleinheit gemeinsamen Benutzungsanzeigeeinrichtungen eine Vereinfachung oder Verminderung der Schaltungseinrichtung, was insbesondere für kleinere Anlagen von Vorteil ist. Die für alle den Speicher benutzenden Funktionseinheiten geltende schnelle und eindeutige Festhalte- und Freigabeanzeige ermöglicht eine Vermeidung unnötiger Seitenaustauschoperationen, und andererseits die schnellere Wiederverfügbarkeit eindeutig nicht mehr benötigter Seitenbereiche.

Die Erfindung wird nach folgend anhand von Ausführungsbeispielen erläutert.

Die Zeichnungen

Fig. 1 zeigt die Blockschaltung der Vorrichtung zur Virtuell-Adressenumforming.

Fig. 2 zeigt die Blockschaltung der Einrichtung zur Ausführung einer Instruktion "Hash-codieren und virtuelle Adresse verifizieren".

Fig. 3 zeigt die Blockschaltung zur Ausführung einer Instruktion "Seitenverzeichnis-Eintrag ungültig Machen".

Fig. 4 zeigt die Blockschaltung der Einrichtung zum Festhalten und Loslassen von Seiten durch Eingangs-Ausgangseinheiten.

Detailbeschreibung

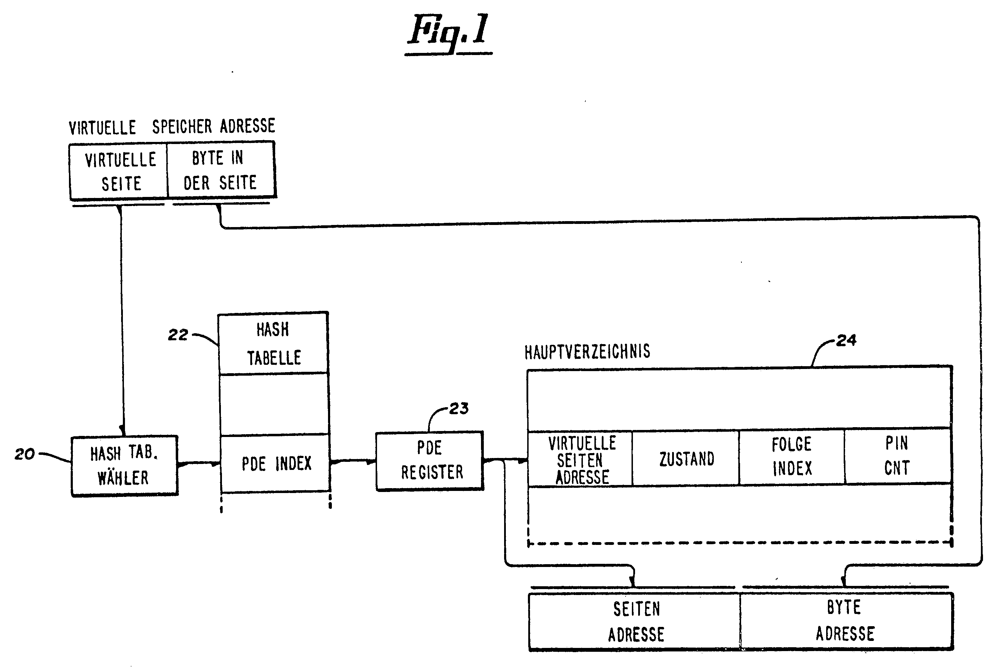

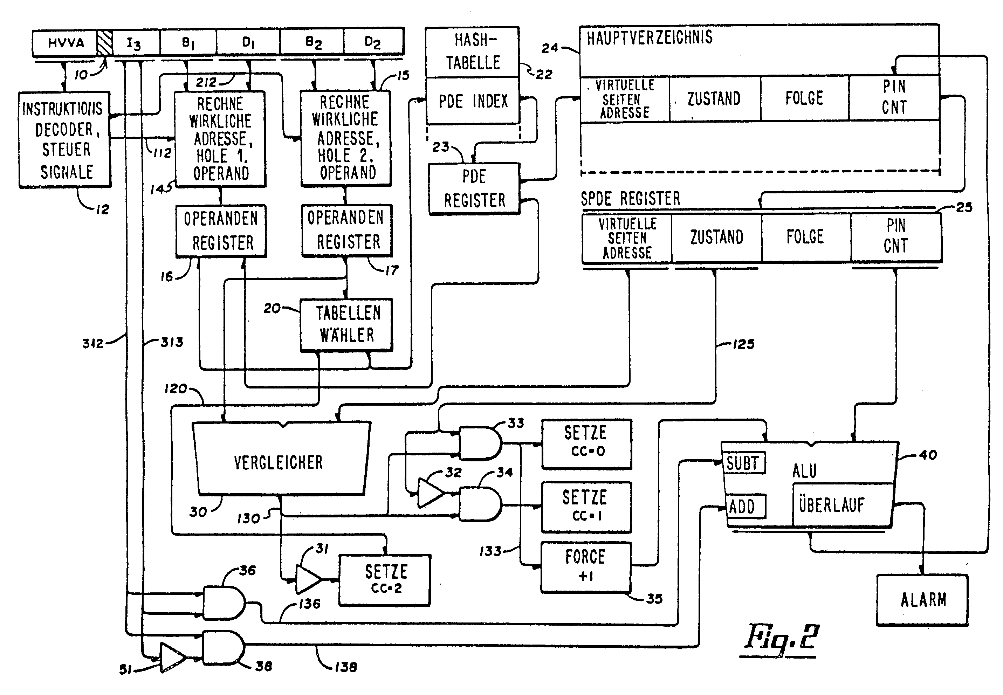

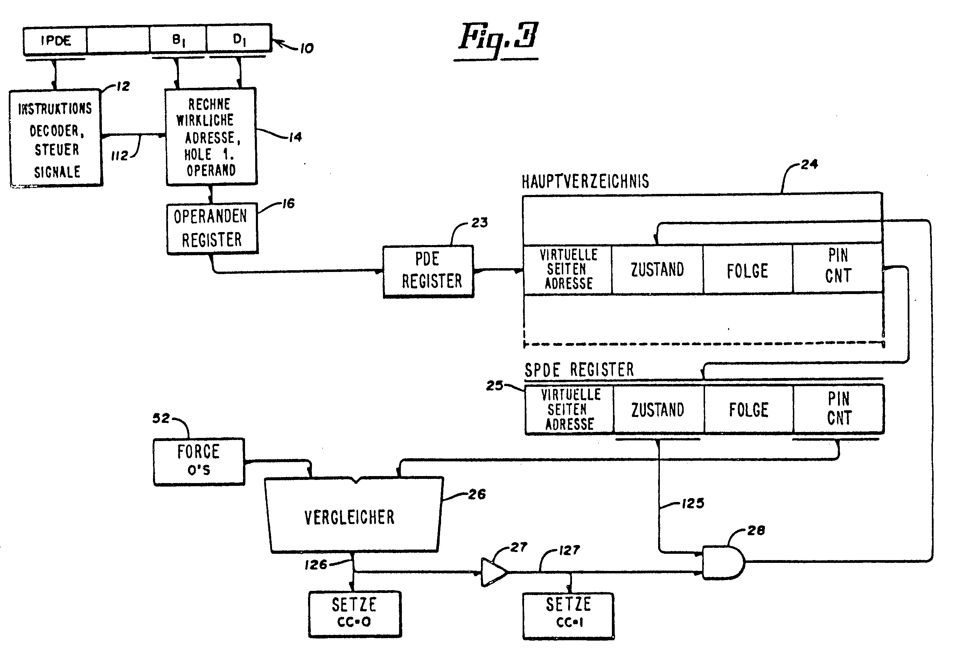

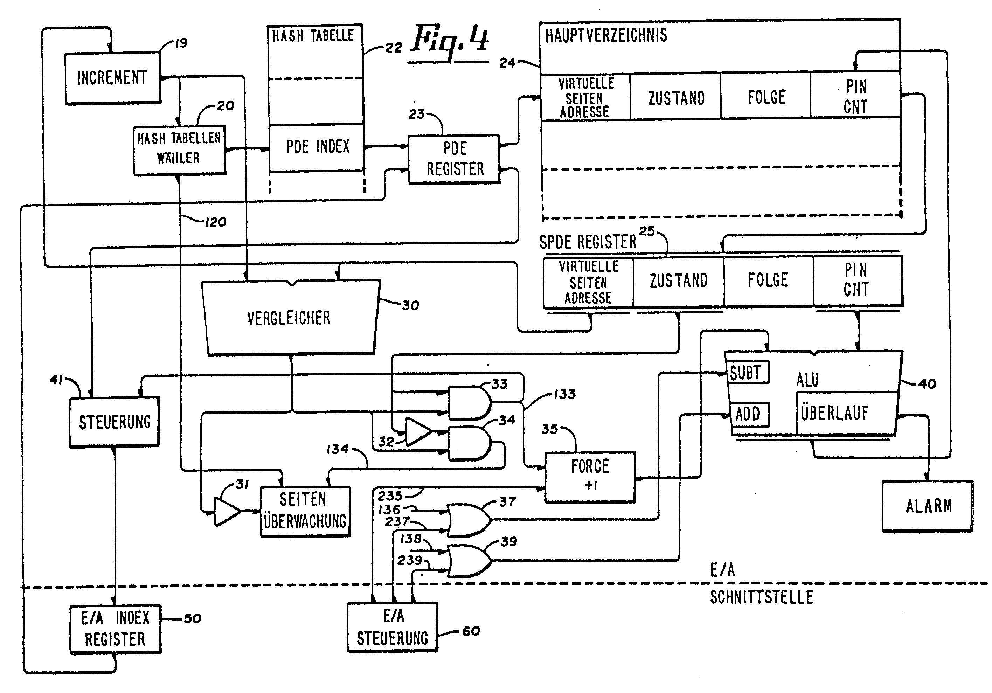

Fig. 1 zeigt die Art der Umformung einer virtuellen Speicheradresse, die aus einer virtuellen Seitenadresse und der Adresse eines Bytes innerhalb einer Seite besteht, in die reelle Adresse im Hauptspeicher. Dazu wird der Hash-Tabellenselektor 20, die Hash-Tabelle 22, des Hauptverzeichniseintragsregister 23, auch als PDE-Register (PDE=Primary Directory Entrey) bezeichnet, und das Hauptverzeichnis 24 benützt. Die Adresse eines bestimmten Bytes innerhalb der Seite kann direkt und ohne Umformung benützt werden.

Der Hash-Tabellenselektor 20 benützt der Virtuell-Seitenteil der virtuellen Speicheradresse, um einen Eintrag in der Hash-Tabelle 20 zu wählen. Der vom Selektor 20 benützte Hash-(oder Adressenkimpressions-) Algorithmus besteht darin, bestimmte Bits aus der virtuellen Speicheradresse zu wählen und einen Hinweis auf die Hash-Tabelle 22 zu bilden. Natürlich sind zahlreiche Hash-Verfahren bekannt, spielen jedoch für die vorliegende Erfindung keine Rolle. Jeder Hash-Tabelleneintrag enthält ein Bit, das anzeigt, ob der Eintrag einen gültigen Hinweis auf das Hauptverzeichnis umfasst. Ist ein Hinweist vorhanden, so wird er benützt, um im PDE-Register 23 einen Eintrag im Hauptverzeichnis 24 anzuzeigen. Zwei Indizes werden demzulfolge benützt, um einen Eintrag im Hauptverzeichnis aufzufinden. Der ersten, der Hash-Index, zeigt auf die Hash-Tabelle 22. Der zweite, der PDE-Index, ist ein Eintrag in der Hash-Tabelle 22, der im PDE-Register 23 benützt wird zum Hinweis auf den Hauptverzeichniseintrag.

Jeder Eintrag im Hauptverzeichnis ist einer einzelnen wirklichen Seite im Hauptspeicher zugeordnet. Der erste Hauptverzeichniseintrag entspricht der ersten Seite im Hauptspeicher, der zweite Eintrag der zweiten Seite usw. für alle Seiten im Hauptspeicher. Jeder Hauptverzeichniseintrag enthält die virtuelle Speicherseitenadresse der zugeordneten Hauptspeicherseite sowie Zustandsinformation über die Seite. Fig. 1 zeigt die Feldeinteilung eines Hauptverzeichniseintrags wie folgt:

Die virtuelle Seitenadresse umfasst den Seitenteil der virtuellen Adresse der Seite im Hauptspeicher, die diesem Eintrag zugeordnet ist. Ein Zustandsfeld betrifft folgende Information über die Seite:

Ein Gültigkeitsbit sagt aus, ob auf die Seite zugegriffen werden darf oder nicht. Wenn das Bit Eins ist, ist die Seite zugreifbar und die Umformung geht weiter. Wenn das Bit Null ist, ist die Seite nicht zugreifbar und ein Adressumformungsfehler wird signalisiert. Das Signal ist identisch mit dem Signal für eine nichtaufgefundene virtuelle Adresse. Ein Hinweisbit gibt an, ob auf die Seite hingewiesen

3

wurde oder nicht. Ein Aenderungsbit gibt an, ob die Seite geändert wurde oder nicht. Das nächste Feld ist der Folge-Index, der einen Hinweis auf den nächstfolgenden Hauptverzeichniseintrag in einer Folge von Einträgen enthält. Das Feld PINCNT enthält einen Ein-Byte Zählwert, um Seiten im Hauptspeicher festzuhalten. Ist der Wert des Zählers von Null verschieden, so bedeutet dies, dass die Seite benützt und daher festgehalten wird und nicht aus dem Hauptspeicher entfernt werden soll.

Hat die Adressumwandlung zur Auswahl eines Hauptverzeichniseintrags geführt, so wird der Seitenteil der umzuwandelnden virtuellen Adresse mit der virtuellen Seitenadresse im Eintrag verglichen. Bei Uebereinstimmung, und sofern das Gültigkeitsbit im Zustandsfeld Eins ist, wird die tatsächliche Hauptspeicheradresse aufgrund der Zuordnung jedes Hauptverzeichniseintrags mit einer einzelnen Seite im Hauptspeicher erzeugt. Liegt Uebereinstimmung vor und das Gültigkeitsbit im Zustandsfeld ist Null, so wird ein Adressumformungsfehlr signalisiert. Bei Nicht-Uebereinstimmung wird das Folge-Indexfeld des Eintrags benützt, um den nächsten Hauptverzeichniseintrag in einer Folge aufzusuchen. Das Verfahren wird fortgesetzt, bis entweder Uebereinstimmung gefunden wird oder bis ein Bit im Folge-Indexfeld das Ende der Folge anzeigt. Nicht Uebereinstimmung am Ende einer Folge bedeutet, dass die Seite momentan nicht im Hauptspeicher steht und von einem Sekundärspeicher geholt werden muss.

Wird es notwendig, eine Seite im Hauptspeicher zu ersetzen, so werden Hinweis- und Aenderungsbits im Zustandsfeld und das PINCNT-Feld überprüft. Die Hinweis- und Aenderungsbits werden von einem Seitenaustauschalgorithmus in der Seitenüberwachung benützt, um die ersetzende Seite zu identifizieren. Die Seite kann nur ersetzt werden, wenn das PINCNT-Feld einen Nullwert enthält und damit anzeigt, dass die Seite nicht festgehalten ist. Ist das PINCNT-Feld ungleich Null, so ist die Seite festgehalten und der Austauschalgorithmus muss eine andere Seite auswählen. Sofern ein Nullwert festgestellt würde, setzt der Austauschalgorithmus sofort das Gültigkeitsbit im Hauptverzeichniseintrag für diese Seite auf Null, wodurch er die Seite als ungültig und nicht zugreifbar bezeichnet. Eine diese Seite betreffende Adressumformung wird dann als Fehler respektive undurchführbar signalisiert. Die Nullüberprüfung im PINCNT-Feld und die Ungültig-Erklärung des Verzeichniseintrags müssen gleichzeitig durchgeführt werden, damit nicht ein neues Programm oder ein Eingangs-Ausgangsgerät auf den Eintrag zugreifen kann, wenn er schon übertragen ist. Während des Uebertrags kann ein Zugriff nicht erfolgen, da der Inhalt der Seite bereits verändert sein könnte.

Das PINCNT-Feld enthält einen Zählwert, damit mehr als ein Aufgabe oder Eingangs-Ausgangsgerät dieselbe Seite festhalten können. Eine Aufforderung, die Seite festzuhalten, erhöht den Zählwert um Eins. Eine Aufforderung, die Seite loszulassen, setzt den Zählwert um Eins herunter. Die Seite wird also festgehalten, wenn dies von mindestens einer Stelle verlangt wird, und kann nicht losgelassen werden, wenn nur eine Stelle dies nicht gestattet. Bevor eine Seite festgehalten werden kann, ist es notwendig festzustellen, dass sie im Hauptspeicher steht. Wiederum muss die Prüfung, ob die Seite im Hauptspeicher steht, und die Erhöhung des PINCNT-Feldes gleichzeitig durchgeführt werden, damit nicht von anderer Stelle die Seite ersetzt wird, bevor sie festgehalten ist.

Die beiden entsprechenden Instruktionen, die HVVA (Hash and Verify Virtual Address) und IPDE (Invalidate Primary Directory Entry) heissen, werden nachfolgend definiert. Die HVVA — Instruktion hat folgende Struktur:

| Bit Nr. | Feld |
|---------|------|
| 0—7 | HVVA |
| 8—11 | (leer) |
| 12—15 | $I_3$ |
| 16—19 | $B_1$ |
| 20—31 | $D_1$ |
| 32—35 | $B_2$ |
| 36—47 | $D_2$ |

Wird die Instruktion ausgeführt, so wird die virtuelle Seitenadresse der zweiten Operandenstelle, die vom Basisregister $B_2$ und der Vershiebung $D_2$ in den Bits 32—47 bezeichnet wird, umgewandelt. Das heisst, die Adresse wird gehast und es wird festgestellt, ob ein Hauptverzeichniseintrag, der dem zweiten Operanden entspricht, besteht. Besteht kein Hauptverzeichnis-Eintrag, so wird die Ausführung der Instruktion unterbrochen, um die Seite aus einem Sekundärspeicher zu holen. In die erste Operandenstelle, die von einem Basisregister $B_1$ und einer Verschiebung $D_1$ in den Bits 16—31 bezeichnet wird, wird der Hash-Tabellen-eintrags-Index und, wenn ein Hauptverzeichnungseintrag vorliegt, der PDE-Indexwert gesetzt, der in der Hash-Tabelle gefunden wurde. Zusätzlich wird, wenn der gefundene Hauptverzeichniseintrag gültig ist, d.h. das Gültigkeitsbit im Zustandsfeld Eins ist, der dritte Operand $I_3$, der in den Bits 12—15 steht, benützt, um zu bestimmen, ob das Festhaltezählfeld PINCNT im Hauptverzeichniseintrag herauf oder herunter gezählt werden muss.

Der erste Operand benötigt eine Wortstelle, d.h. vier Bytes im Speicher. Der ursprüngliche Wert des ersten Operanden ist unwichtig. Wenn die Instruktion HVVA ausgeführt ist, enthalten die Bits 0—14 dieses Wortes im Speicher den Hash-Tabelleneintrags-Indexwert, das Bit 15 ist Null, die Bits 16—

4

27 enthalten den Index für den Hauptverzeichniseintrag, sofern vorhanden, und die Bits 28—31 sind Null. Ist der Hauptverzeichniseintrag nicht vorhanden, so bleiben die Bits 16—31 unverändert.

Die Bitstellen des Feldes $I_3$, in denen irgendwelche Aenderungen des PINCNT-Feldes vermerkt werden, sind folgendermassern definiert:

| Bit | Definition |
|---|---|
| 12 | Aenderung des Festhaltezählers |
|  | 0 Zähler nicht verändert |
|  | 1 Zählerstand erhöhen/erniedrigen |
| 13 | Zählerstand erhöhen/erniedrigen |
|  | 0 Erhöhen um Eins |
|  | Erniedrigen um Eins |
| 14 | Nicht benützt |
| 15 | Nicht benützt |

Ueberschreitet der Zählerstand den Wert 255 oder geht er unter Null, so erfolgt ein Alarm.

Die Zustandscodes nach Ausführung der HVVA-Instruktion sind folgendermassern. Die Codes zeigen dem System die möglichen Resultate der Instruktionsausführung an.

0 Hauptverzeichniseintrag vorhanden und gültig
1 Hauptverzeichniseintrag vorhanden und ungültig
2 Hauptverzeichniseintrag existiert nicht
3 Nicht benützt

Die IPDE-Instruktion (Invalidate Primary Directory Entry) hat folgende Struktur:

| Bit Nr. | Feld |
|---|---|
| 0—7 | IPDE |
| 8—15 | (leer) |
| 16—19 | $B_1$ |
| 20—31 | $D_1$ |

Das PINCNT-Feld im Hauptverzeichniseintrag, das vom ersten Operanden festgelegt wird und vom Basisregister $B_1$ und der Verschiebung $D_1$ im Feld 16—31 bezeichnet ist, wird mit Null verglichen. Ist es gleich Null, so wird das Gültigkeitsbit auf Null gesetzt. Ist das Feld nicht gleich Null, so bleibt der Hauptverzeichniseintrag unverändert.

Der erste Operand besetzt zwei Bytes im Speicher. Die Bits 0—11 werden als Hauptverzeichnis-Indexwert benützt, um den Hauptverzeichniseintrag aufzusuchen, der ungültig zu erklären ist. Zeigt der Indexwert auf einen Hauptverzeichniseintrag ausserhalb des Bereichs, so wird ein Fehler festgestellt und die Operation unterdrückt.

Die nachfolgenden Zustandscodes können sich bei der Ausführung der IPDE-Instruktion als Resultat ergeben.

0 Hauptverzeichniseintrag ungültig, Festhaltezähler gleich Null
1 Hauptverzeichniseintrag nicht ungültig, Festhaltezähler nicht gleich Null
2 Unbenützt
3 Unbenützt

Beschreibung der Ausführung

Die Ausführung der HVVA-Instruktion ist aus Fig. 2 ersichtlich, wobei gezeigt ist, wie der Festhaltezählwert herauf- oder herabgesetzt wird. Wird festgestellt, dass die Instruktion im Instruktionspuffer 10 eine HVVA-Instruktion ist, so erzeugt der Instruktionsdekoder 12 die nötigen Steuersignale auf den Leitungen 112 und 212, die veranlassen, dass die beiden Operanden gemäss dem Inhalt des Basisregisters und der Verschiebung in der Instruktion aus dem Hauptspeicher geholt werden. Die Errechnung der tatsächlichen Adresse ist für den ersten Operand im Block 14 und für den zweiten Operand im Block 15 gezeigt. Die tatsächlichen Operandenadressen werden bekanntermassen berechnet durch Addieren der Verschiebungen $D_1$ und $D_2$ im Instruktionspuffer 10 zum Inhalt der Basisregister, die in den Feldern $B_1$ und $B_2$ identifiziert sind. Diese wirklichen Adressen werden dann benützt, um die beiden Operanden vom nichtdargestellten Hauptspeicher in das erste und zweite Operandenregister 16 und 17 zu holen. Das zweite Operandenregister 17 enthält jetzt die virtuelle Adresse, die gehasht werden soll. Der Hash-Tabellenselektor 20 benützt gewisse Bits der virtuellen Adresse im Register 17, um eine Zahl, den Hash-Tabellen-Indexwert, zu erzeugen. Dieser Indexwert wird benützt, um einen Eintrag in der Hash-Tabelle 22 zu wählen, der die PDE-Indizes enthält und der

5

**0010198**

vorzugsweise im Hauptspeicher steht. Gewisse Einträge in der Hash-Tabelle 22 enthalten keinen PDE-Index. Dieser Umstand wird durch ein Bit im Hash-Tabelleneintrag angezeigt, das vom Wähler 20 geprüft wird. Ist kein PDE-Index vorhanden, so muss die der virtuellen Adresse entsprechende Seite von einem Sekundärspeicher geholt werden. Ein Seitenfehlersignal entsteht in der Leitung 120 und der Zustandscode wird auf 2 gesetzt. Existiert ein gültiger PDE-Indexwert, so wird Indexeintrag von der Hash-Tabelle 22 in das PDE-Register 23 geladen, das den Index zum Hauptverzeichnis zeigt, und wird benützt, um einen Eintrag im Primärverzeichnis 24, das ebenfalls im Hauptspeicher steht, zu wählen. Der gewählt Verzeichniseintrag wird ins SPDE-Register 25 geladen. Der Seitenteil der virtuellen Adresse, der im zweiten Operandenregister 17 steht, wird mit der virtuellen Adresse im SPDE-Register 25 im Vergleicher 30 verglichen. Geht der Vergleich auf, so gibt der Vergleicher auf der Leitung 130 ein Ausgangssignal ab, das anzeigt, dass der Hauptverzeichniseintrag existiert. Geht der Vergleich nicht auf, so entsteht kein Ausgangssignal und das Folge-Indexfeld im SPDE-Register 25 wird benützt, um einen anderen Eintrag des Hauptverzeichnisses 24 auszuwählen. Dieser Vorgang geht weiter, bis entweder Ueberinstimmung gefunden oder das Ende der Folge von Hauptverzeichniseinträgen angetroffen wird, im welchem Fall das richtige Signal auf der Leitung 130 erscheint. Das Erreichen der Folge ohne Uebereinstimmung bedeutet, dass ein Primärverzeichniseintrag, der die betreffende virtuelle Adresse enthält, nicht existiert, weshalb der Vergleicherausgang Null ist. Der Ausgang des Inverters 31 ist darauf Eins und wird benützt, um den Zustandscode auf 2 zu setzen, wodurch diese Situation angezeigt und die Ausführung der Instruktion beendet wird.

Wen der richtige Hauptverzeichniseintrag existiert, stellt der Vergleicher 30 Ueberinstimmung fest und erzeugt eine Eins auf der Ausgangsleitung 130. In diesem Fall wird das Gültigkeitsbit des Zustandfelds vom Hauptverzeichniseintrag, das im SPDE-Register 25 steht, auf die Leitung 125 gegeben, um festzustellen, ob eine Erhöhung oder Erniedrigung des Zählers nötig ist. Ist das Gültigkeitsbit eine Eins, dann sind beide Eingänge der UND-Schaltung 33 Eins und ihr Ausgang ebenfalls. Dadurch wird der Zustandscode auf Null gesetzt, was anzeigt, dass der Hauptverzeichniseintrag existiert und gülltig ist. Zusätzlich wird eine Eins über die Leitung 133 an die FORCE+1 Schaltung 35 gegeben, wodurch eine Eins in die linke Hälfte der als ALU bezeichneten arithmetischen Einheit 40 gegeben wird. Dies veranlasst die ALU 40, das PINCNT-Feld um Eins zu erhöhen oder herabzusetzen. Ist das Gültigkeitsbit im Zustandsfeld Null, dann ist der Ausgang der UND-Schaltung 33 Null, die jedoch vom Inverter 32 am Ausgang der UND-Schaltung 34 als Eins erscheint. Dadurch wird der Zustandscode auf Eins gesetzt und so angezeigt, dass der Hauptverzeichniseintrag zwar existiert, aber ungültig ist.

Existiert der Hauptverzeichniseintrag und ist er gültig, so hängt die Entscheidung, das PINCNT-Feld herauf oder herab zu setzen, von den Bits 13 und 13 im $I_3$-Feld der HVVA-Instruktion ab. Diese Bits, die auf Leitungen 312 und 313 vom Instruktionspuffer 10 kommen, gelangen zum Inverter 51 und den UND-Schaltungen 36 und 38, um zu bestimmen, ob die ALU 40 das PINCNT-Feld durch das positive Bit in ihrer linken Hälfte erhöht oder erniedrigt oder unverändert lässt. Der Ausgang der UND-Schaltungen 36 und 38 geht über Leitungen 136 und 138 und die Subtraktions- und Additions-schaltungen der ALU. Das PINCNT-Feld gelangt vom SPDE-Register 25 an die rechte Hälfte der ALU 40, die entsprechende Operation wird in der ALU durchgeführt und das Resultat im PINCNT-Feld des gewählten Eintrags im Hauptverzeichnis 25 gespeichert. Wenn Bit 12 und Bit 13 des $I_3$-Feldes auf Eins stehen, ist der Ausgang der UND-Schaltung 36 Eins und das PINCNT-Feld wird herabgesetzt. Steht Bit 12 auf Eins und Bit 13 auf Null, so ist der Ausgang der UND-Schaltung 38 eine Eins und das PINCNT-Feld wird heraufgesetzt. Wird von den Bits 12 und 13 weder eine Addition noch eine Subtraktion verlangt, d.h. Bit 12 ist gleich Null, oder wenn vom Element 35 keine Eins geliefert wird, lässt die ALU 40 das PINCNT-Feld unverändert. Das Ueberlaufsignal der ALU zeigt an, wenn das PINCNT-Feld über 255 hinaus erhöht oder unterhalb Null erniedrigt wurde, wodurch ein Alarm ausgelöst wird.

Zur Vollendung der HVVA-Instruktion wird ein Hash-Tabelleneintrags-Indexwert und ein PDE-Indexwert, sofern der Hauptverzeichniseintrag existiert, in das erste Operandenregister 16 gesetzt und das ganze Wort im Hauptspeicher unter der ersten Operandenadresse gespeichert. Wie schon gesagt, steht der Hash-Tabelleneintrags-Indexwert in den Bits 0—14 des ganzen Worts, Bit 15 ist Null und Bit 16—27 enthalten den Hauptverzeichnis-Indexwert. Die Bits 28—31 sind ebenfalls Null. Wurde kein Hauptverzeichniseintrag gefunden, so bleiben Bits 16—31 unverändert. Der entstehende und oben besprochene Zustandscode wird in den entsprechenden hiert nicht dargestellten Flip-Flop-Schaltungen registriert.

Fig. 3 zeigt die Ausführung der IPDE-Instruktion. Wird festgestellt, dass der Instruktionspuffer 10 diese Instruktion enthält, so erzeugt der Instruktionsdekoder 12 die Steuersignale auf Leitung 112, durch welche der Operand, wie Block 14 zeigt, vom Hauptspeicher geholt wird. Um die wirkliche Adresse des Operanden zu errechnen, wird die Verschiebung $D_1$ vom Instruktionspuffer 10 zum Inhalt des Basisregisters ($B_1$) addiert. Das Operandenregister 16 enthält jetzt den Hauptverzeichnis-Indexwert, der in das Hauptverzeichniseintrags-Indexregister PDE 23 geladen und dann benützt wird, um einen Eintrag im Hauptverzeichnis 24 auszuwählen. Der ausgewählte Eintrag wird in das SPDE-Register 25 geladen. Der Inhalt des PINCNT-Felds des Eintrags im SPDE-Register 25 wird im Vergleicher 26 mit einem Feld von Nullen verglichen, das in der Schaltung 52 erzeugt wird. Der Ausgang des Vergleichers 26 auf der Leitung 126 zeigt an, ob das PINCNT-Feld gleich Null ist. Ist der Vergleich aufgegangen und

6

**0010198**

der Ausgang Eins, dann wird der Zustandscode auf Null gesetzt. Ist der Vergleich nicht aufgegangen und der Ausgang Null, so wird über den Inverter 27 und die Leitung 127 der Zustandscode gleich Eins gesetzt. Ueber Leitung 125 kommt das Gültigkeitsbit vom Zustandsfeld des SPDE-Registers 25. Es wird in der UND-Schaltung 28 mit dem Ausgang des Inverters 127 verknüpft. Ist das PINCNT-Feld gleich Null, so wird das neue Gültigkeitsbit am Ausgang der Schaltung 28 ebenfalls Null. Ist jedoch das PINCNT-Feld nicht gleich Null, so steht am Ausgang der UND-Schaltung 28 das gleiche Gültigkeitsbit, das vorher im SPDE-Register 25 stand. Schliesslich wird der Ausgang der UND-Schaltung 28 als neues Gültigkeitsbit im Zustandsfeld des ausgewählten Eintrags im Hauptverzeichnis 24 gespeichert. Damit ist die Ausführung der IPDE-Instruktion vollendet.

Das Blockschaltbild der Fig. 4 zeigt, wie die Eingangs-Ausgangsgeräte einen Teil der beschriebenen Vorrichtung benützen, um in Verbindung mit den Instruktionen HVVA und IPDE Seiten als Datenpuffer im Hauptspeicher festzuhalten. Die Eingangs-Ausgangsgeräte halten Seiten fest, solange sie sie brauchen, und lassen sie los, wenn sie sie nicht mehr brauchen. Der Datenfluss in Fig. 4 ist dem der Fig. 2 ähnlich. Zusätzlich weist Fig. 4 jedoch die Inkrementierschaltung 19 auf, die ODER-Schaltungen 37 und 39, die Steuerschaltung 41, das E/A-Indexregister 50 und die E/A-Steuerung 60. Eine Reihe von logischen Schaltungen kommt sowohl in Fig. 2 als auch in Fig. 4 vor, so namentlich der Hash-Tabellenselektor 20, die Hash-Tabelle 22, das PDE-Register 23, das Hauptverzeichnis 24, das SPDE-Register 25, der Vergleicher 30, die UND-Schaltungen 33 und 34, die Schaltung 35 und die ALU 40. Nachfolgend soll die Arbeitsweise der zusätzlich zur Ausführung HVVA- und IPDE-Instruktion benötigten Elemente beschrieben werden, wobei die Eingangs-Ausgangsgeräte dynamisch Seiten festhalten und loslassen. Wenn ein E/A-Gerät eine bestimmte Datenübertragung vornimmt, enthält das E/A-Indexregister 50 einen Indexzeiger auf den Hauptverzeichniseintrag für die Seite, von welcher Daten geholt oder in welcher Daten gespeichert werden sollen. Wenn eine neue Seite für die Datenübertragung benötigt wird, muss der Zeiger im E/A-Indexregister nachgeführt werden. Es müssen also Mittel vorgesehen werden, um den Uebergang von einer Seite auf die nächste zu erkennen und den Seitenwechsel auszuführen. Nach jeder Datenübertragung wird ein nicht dargestellter Seitenwelchselzähler vorwärts oder in bestimmten Fällen rückwärts geschaltet, um die Byteadresse der nächstfolgenden Speicherstelle, die benötigt wird, anzuzeigen. Je nach der Anzahl von Bytes in der Seite geben gewisse Bits in der Byteadresse im Seitenwechselzähler an, dass das Seitenende erreicht wurde. In diesem Falle werden die entsprechenden Bits festgestellt und das E/A-Gerät lässt nun die Seite, die es zu Ende benützt hat, los, um die nächste Seite im Seitenpuffer festzuhalten. Langsamere E/A-Geräte können eine neue Seite festhalten und die fertigbenützte loslassen. Für schnelle Geräte kann es erforderlich sein, mehrere Seiten zum voraus festzuhalten und eine neue Seite zuzufügen jedesmal wenn eine Seite fertigbenutzt ist. Die Funktion ist in beiden Fällen im wesentlichen dieselbe. Werden jedoch mehrere Seiten im voraus festgehalten, so sind mehrere E/A-Indexregister 50 notwendig, um auf die reservierten Hauptverzeichniseinträge zu zeigen, die zwischen der fertigbenützten und der neu festgehaltenen Seite liegen.

Wurde von der E/A-Einheit im Datenpuffer ein Seitenübergang festgestellt, dann wird der Inhalt des E/A-Indexregisters 50 ins Hauptverzeichniseintragsregister 23 übertragen, das einen neuen Eintrag vom Hauptverzeichnis 24 auf das SPDE-Register 25 überträgt. Der übertragene Eintrag ist der der fertigbenützten Seite, weil das E/A-Indexregister noch nicht nachgetragen wurde. Das virtuelle Seitenadressfeld im SPDE-Register 25 wird jetzt auf die Inkrementierschaltung 19 übertragen, das PINCNT-Feld im SPDE-Register 25 wird auf die ALU 40 übertragen, um Eins dekrementiert und wieder im Hauptverzeichniseintrag der fertigbenützten Seite gespeichert. Die Signale in der ALU 40, die die Subtraktion um Eins im PINCNT-Feld bewirken, werden von der E/A-Steuerung über Leitung 235 über die Schaltung 35 und über die Leitung 237 über die ODER-Schaltung 37 geliefert. Beide Leitungen werden von der E/A-Steuerung 60 her betätigt. Der zweite Eingang der ODER-Schaltung 37 ist die Leitung 136 vom Ausgang der UND-Schaltung 36 in Fig. 2, die anzeigt, wenn die HVVA-Instruktion ausgeführt wird und während dieser Instruktion inaktiv ist. Die Operaion setzt das PINCNT-Feld der fertigbenützten E/A-Pufferseite herunter. Das bedeutet, dass das E/A-Gerät die Seite los Lässt; die Seite kann jedoch von anderen Einheiten noch festgehalten werden.

Die wirkliche Adresse der nächsten E/A-Pufferseite entsteht aus der erhöhten virtuellen Seitenadresse von der Inkrementierschaltung 19 als Eingang für den Hash-Tabellenwähler 20, wobei ein neuer Hash-Tabellen-Indexwert entsteht. Dieser Indexwert wählt einen Eintrag in der Hash-Tabelle 22. Enhält der Hash-Tabelleneintrag keinen PDE-Indexwert, so wird ein Seitenfehler auf Leitung 120 festgestellt, worauf die Seitenüberwachung das Holen und Festhalten der Seite besorgt. Enthält andererseits der Hash-Tabelleneintrag einen PDE-Indexwert, so wird dieser in das PDE-Register 23 geladen, um den Hauptverzeichniseintrag für die nächste Pufferseite zu holen. Gleichzeitig wird der Inhalt des PDE-Registers 23, der auf die neue Pufferseite zeigt, über die Steuerschaltung 41 auf das E/A-Indexregister 50 übertragen. Der Ausgang der UND-Schaltung 33 als zweiter Eingang für die Steuerschaltung 41 stellt sicher, dass der Inhalt des PDE-Registers 23 nicht an das E/A-Indexeregister 50 gelangt, sofern nicht sicher steht, dass ein Hauptverzeichniseintrag existiert und gültig ist. Die Logik für den Ausgang der UND-Schaltung 33 wurde bereits in Verbindung mit der HVVA-Instruktion und dem Zustandscode Null beschrieben.

Die UND-Schaltung 33 erzeugt also nur dann eine Auslöse-Bedingung für die Schaltung 41, wenn

7

**0010198**

der Vergleicher 30 festgestellt hat, dass die virtuelle Seitenadresse und ein Gültigkeitsbit vom Zustandsfeld des SPDE-Registers 25 vorliegen. Die Steuerung 41 kann auf verschiedene Arten ausgeführt sein, z.B. kann sie ein Register enthalten desselben Inhalts wie das PDE-Register 23, dessen Ausgang zum E/A-Register 50 übertragen wird, wenn dies von einer Eins am Ausgang der UND-Schaltung 33 veranlasst wird. Audererseits kann die Steuerung 41 eine Reihe von UND-Schaltungen enthalten, deren jede an einem Eingang den Ausgang der UND-Schaltung 33 und am anderen Eingang ein Bit vom PDE-Register 23 empfängt. Eine andere Möglichkeit ist, dass die Schaltung 41 eine Anzahl Bits vom PDE-Register 23 auf das E/A-Register 50 überträgt.

Das PINCNT-Feld im Hauptverzeichniseintrag für die nächste Pufferseite, die nun im SPDE-Register 25 steht, wird auf die rechte Hälfte der ALU 40 übertragen, wird in der ALU 40 erhöht und dann im entsprechenden Hauptverzeichniseintrag abgespeichert. Wenn die ALU 40 das PINCNT-Feld über 255 hinaus erhöht, entsteht ein Ueberlauf, der einen Alarm auslöst. Die Signale, eine Eins zum PINCNT-Feld zu addieren, kommen über Leitung 235 und Schaltung 35 (die Eins zusetzt) und über die Leitung 239 sowie der ODER-Schaltung 39. Beide erhalten ihr steuer signal von der E/A-Steuerung 60. Der zweite Eingang der ODER-Schaltung 39 ist die Leitung 138, die vom Ausgang der UND-Schaltung 38 in Fig. 2 kommt und für die Ausführung der HVVA-Instruktion benützt wird, hier jedoch nicht aktiv ist.

Das PINCNT-Feld wird nicht erhöht, wenn der Hauptverzeichniseintrag nicht gültig ist oder die virtuelle Seitenadresse vom SPDE-Register 25 und von der Inkrementierschaltung nicht übereinstimmen. Wird das Ende der Hauptverzeichniseintragsfolge erreicht, ohne dass Uebereinstimmung zwischen der Adresse in der Inkrementierschaltung 19 und einem Hauptverzeichniseintrag in der Folge gefunden wird, so wird ein Seitenfehler festgestellt, und die Seitenüberwachung holt die entsprechende Seite und hält sie fest. Desgleichen, wenn ein Hauptverzeichniseintrag gefunden wird, aber das Gültigkeitsbit im Zustandsfeld auf Null steht. Diese beiden Bedingungen werden festgestellt durch den Inverter 31, dessen Ausgang Eins, d.h. ein Seitenfehler ist, wenn der Vergleicher 30 keine Uebereinstimmung findet und durch den Vergleicher 32 in Berbindung mit der UND-Schaltung 34, die zusammen eine Eins auf Leitung 134 erzeugen, wenn der Vergleicher 30 Uebereinstimmung feststellt, aber das Gültigkeitsbit im Zustandsfeld anzeigt, dass die Seite ungültig ist. Beide Fälle sind vergleichbar der Situation die herrscht, wenn der Zustandscode nach Ausführung der HVVA-Instruktion auf Eins oder Zwei steht.

Vorstehend wurde die erfindungsgemässe Koordinationsvorrichtung für die Seitenwechselsteuerung gezeigt, wobei entweder die zentrale Verarbeitungseinheit oder die Eingangs-Ausgangsgeräte eine Seite festhalten oder loslassen können, um ihren Ersatz durch die Seitenüberwachung zu ermöglichen oder zu verhindern Es wurdeweiterhin gezeigt, dass die Koordinations-vorrichtung das Festhalten und Loslassen durch die E/A-Geräte unabhängig von dem der zentralen Verarbeitungseinheit ermöglicht. Das wird erreicht mittels eines gemeinsamen Virtuell-Adressenumformers, der ein Seitenhauptverzeichnis mit Einträgen für jede Seite im Hauptspeicher umfasst, wobei in jedem Eintrag ein von beiden Funktionsbereichen änderbares Belegungszählfeld vorgesehen ist.

## Patentansprüche

1. Vorrichtung zur Steuerung des Seitenaustausches in einem Datenverarbeitungssystem mit virtuellem Speicher, der von der Zentraleinheit und Eingangs-Ausgangsgeräten gemeinsam benutzt wird, wobei eine gemeinsame Uebersetzeranordnung zur Umsetzung von virtuellen in Hauptspeicheradressen vorhanden ist, die ein Seitenverzeichnis mit den Hauptspeicherseiten zugeordneten Seiteneinträgen für Adress- und Zustandsangaben aufweist, dadurch gekennzeichnet, dass jeder Seiteneintrag im Seitenverzeichnis (24) ein die Benutzung der zugeordneten Seite durch die Zentraleinheit und die Eingangs-Ausgangsgeräte anzeigendes Belegungszählfeld (PINCNT) umfasst, und dass Einrichtungen (25, 35, 36, 38, 40) vorgesehen sind, um den Inhalt des Belegungszählfeldes sowohl gesteuert von der Zentraleinheit als auch in Abhängigkeit von Operationen der Eingangs-Ausgangsgeräte zu verändern.

2. Vorrichtung nach Anspruch 1, dadurch gekennzeichnet, dass durch die Einrichtungen (25, 35, 36, 38, 40) zur Aenderung des Inhaltes des Belegungszählfeldes (PINCNT) der durch den Inhalt dargestellte Wert wahlweise erhöht oder vermindert werden kann.

3. Vorrichtung nach Patentanspruch 1, wobei eine Anordnung (30) zum Vergleich einer jeweils vorgegebenen virtuellen Adresse mit der in einem Seitenverzeichnis-Eintrag enthaltenen virtuellen Adresse vorhanden ist, dadurch gekennzeichnet, dass bei positivem Vergleich eine unmittelbare Veränderung des Inhalts des Belegungszählfeldes (PINCNT) durch die betreffenden Einrichtungen (35, 36, 38, 40) vorgenommen wird.

4. Vorrichtung nach Anspruch 2 oder 3, dadurch gekennzeichnet, dass die Einrichtungen (35, 36, 38, 40) zur Aenderung des Inhalts des Belegungszählfeldes (PINCNT) in Abhängigkeit vom Inhalt eines Befehlsregisters (10) gesteuert werden können, um entweder eine Erhöhung oder eine Verminderung des Belegungszählfeld-Inhalts zu bewirken.

5. Vorrichtung nach Anspruch 1, dadurch gekennzeichnet, dass Einrichtungen (26, 27, 28, 52, 126, 127) vorgesehen sind, um den Inhalt des Belegungszählfeldes (PINCNT) auf einen bestimmten

8

**0010198**

Wert zu überprüfen, und um bei Feststellung dieses Wertes unmittelbar eine Zustandsanzeige im betreffenden Seitenverzeichnis-Eintrag so einzustellen, dass sie eine Ungültigkeit der betreffenden Seite anzeigt.

6. Vorrichtung nach Anspruch 1, 3 oder 5, dadurch gekennzeichnet, dass Elemente (32, 33, 34, 125) vorgesehen sind, um den Inhalt eines Gültigkeitsfeldes im einem Seitenverzeichnis-Eintrag zu überprüfen, und im bei Anzeige der Nichtgültigkeit eine Aenderung des Inhaltes des Belegungs-Zählfeldes (PINCNT) zu verhindern.

7. Vorrichtung nach Anspruch 1, wobei eine Anordnung vorgesehen ist, um während Eingabe/Ausgabe-Operationen bei Seitenbereichs-Ueberschreitung von einer laufenden, alten Seite auf die nächstfolgende, neue Seite überzugehen, dadurch gekennzeichnet, dass Einrichtungen (37, 39, 60, 237, 239) vorhanden sind, um eine Verminderung des Wertes im Belegungszählfeld (PINCNT) des Seitenverzeichnis-Eintrags der alten Seite und eine Erhöhung des Wertes im Belegungszählfeld des Seitenverzeichnis-Eintrags der neuen Seite zu bewirken.

**Revendications**

1. Dispositif pour la commande de l'échange de pages dans un système de traitement de données ayant une mémoire virtuelle utilisée en commun par l'unité centrale et par des dispositifs d'entrée/sortie, comprenant un moyen de translation commun pour la conversion d'adresses de mémoire virtuelle en adresses de mémoire principale présentant un répertoire de pages avec des inscriptions de pages correspondant à des informations d'adresses et d'états associées aux pages de la mémoire principale; caractérisé en ce que chaque inscription de page dans le répertoire de page (24) englobe un champ de comptage de présence (PINCNT) indiquant l'utilisation de la page associée par l'unité centrale et les dispositifs d'entrée/sortie et en ce qu'il est prévu des moyens (25, 35, 35, 38, 40) pour modifier le contenu du champ de comptage d'occupationsous la commande de l'unité centrale aussi bien qu'en réponse aux opérations des dispositifs d'entrée/sortie.

2. Dispositif selon la revendication 1, caractérisé en ce que lesdits moyens (25, 35, 36, 40) servant à modifier le contenu du champ de comptage de présence (PINCNT) permettent, au choix d'augmenter ou de diminuer la valeur représentée par ledit contenu.

3. Dispositif selon la revendication 1 comprenant un dispositif (30) servant à comparer une adresse virtuelle donnée à l'adresse virtuelle contenu dans une inscription de répertoire de pages; caractérisé en ce que, en cas de comparaison positive, le contenu du champ de comptage de présence (PINCNT) est immédiatement modifié par les moyens correspondants (35, 36, 38, 40).

4. Dispositif selon l'une quelconque des revendications 2 ou 3, caractérisé par le fait que lesdits moyens (35, 36, 38, 40) servant à modifier le contenu du champ de comptage de présence (PINCNT) peuvent être commandés en fonction du contenu d'un registre d'instructions (10) pour opérer soit une augmentation soit une diminution du contenu du champ de présence.

5. Dispositif selon la revendication 1, caractérisé en ce que des moyens (26, 27, 28, 52, 126, 127) sont prévus pour tester si le contenu du champ de comptage de présence (PINCNT) présente une valeur déterminée et pour disposer immédiatement, en cas de constatation de cette valeur, une indication d'état dans l'inscription de répertoire de pages correspondante de telle sorte qu'elle signale la non-validité de la page concernée.

6. Dispostif selon l'une quelconque des revendications 1, 3 ou 5, caractérisé en ce que des éléments (32, 33, 34, 125) sont prévus pour tester le contenu d'un champ de validité dans une inscription de répertoire de pages et pour empêcher en cas d'indication de non-validité, une modification du contenu du champ de comptage de présence (PINCNT).

7. Dispositif selon la revendication 1 comprenant un dispositif permettant de passer au cours d'opérations d'entrée/sortie, en cas de dépassement d'une zone de page, d'une page ancienne en cours à la page suivante; caractérisé en ce que des moyens (37, 39, 60, 237, 239) prévus pour opérer une diminution de la valeur dans le champ de comptage de présence (PINCNT), de l'inscription de répertoire de pages de l'ancienne page, et une augmentation de la valeur, dans le champ de comptage de présence, de l'inscription de répertoire de pages de la nouvelle page.

**Claims**

1. Apparatus for page replacement control in a data processing system having virtual storage commonly used by the central processing unit and by input-output devices, common translation means being provided for converting virtual addresses to main storage addresses and including a page directory having page entries corresponding to pages in main storage, for address and status information, characterized in that each page entry in said page directory (24) comprises a pin count field (PINCNT) for indicating usage of the corresponding page by said central processing unit and by said input-output units, and that means (25, 35, 36, 38, 40) are provided for modifying contents of said pin count field under control of said central processing unit as well as in response to operations of said input-output devices.

2. Apparatus in accordance with claim 1, characterized in that said means (25, 35, 36, 38, 40) for

9

modifying contents of said pin count field (PINCNT) can selectively increase or decrease the value represented by said contents.

3. Apparatus in accordance with claim 1, comprising an arrangement (30) for comparing a given virtual address to a virtual address contained in a page directory entry, characterized in that in case of a match an immediate modification of the contents of said pin count field (PINCNT) by the respective means (35, 36, 38, 40) is effected.

4. Apparatus in accordance with claim 2 or 3, characterized in that said means (35, 36, 38, 40) for changing the contents of said pin count field (PINCNT) can be controlled in dependence of the contents of an instruction register (10) for either increasing or decreasing contents of said pin count field.

5. Apparatus in accordance with claim 1, characterized in that means (26, 27, 28, 52, 126, 127) are provided for testing contents of said pin count field (PINCNT) for a given value, and for immediately setting, if said value is detected, a status indication in the respective page directory entry to indicate invalidity of the respective page.

6. Apparatus in accordance with claim 1, 3 or 5, characterized in that elements (32, 33, 34, 125) are provided for testing contents of a validity field in a page directory entry, and for preventing, if invalidity is indicated, a modification of the contents of said pin count field (PINCNT).

7. Apparatus in accordance with claim 1 comprising an arrangement for going from a current old page to the next new page if during input-output operations the page area is surpassed, characterized in that means (37, 39, 60, 237, 239) are provided for effecting a decrease of the value in the pin count field (PINCNT) in the page directory entry of the old page and an increase of the value in the pin count field of the page directory entry of the new page.

# Fig.1

VIRTUELLE SPEICHER ADRESSE

| VIRTUELLE SEITE | BYTE IN DER SEITE |
|---|---|

**HASH TABELLE** (22)

| PDE INDEX |
|---|

**HASH TAB. WÄHLER** (20)

**PDE REGISTER** (23)

**HAUPTVERZEICHNIS** (24)

| VIRTUELLE SEITEN ADRESSE | ZUSTAND | FOLGE INDEX | PIN CNT |
|---|---|---|---|

| SEITEN ADRESSE | BYTE ADRESSE |
|---|---|

*Fig. 2*

# Fig.3

| IPDE | | B₁ | D₁ | 10

IPDE / B₁ / D₁ → row 10

INSTRUKTIONS DECODER, STEUER SIGNALE — 12

RECHNE WIRKLICHE ADRESSE, HOLE 1. OPERAND — 14

112

OPERANDEN REGISTER — 16

PDE REGISTER — 23

HAUPTVERZEICHNIS — 24

| VIRTUELLE SEITEN ADRESSE | ZUSTAND | FOLGE | PIN CNT |

SPDE REGISTER

25

| VIRTUELLE SEITEN ADRESSE | ZUSTAND | FOLGE | PIN CNT |

FORCE 0'S — 52

VERGLEICHER — 26

125

126

27 — 127

28

SETZE CC•0

SETZE CC•1

0010 198

3

*Fig.4*

HASH TABELLE 22

HAUPTVERZEICHNIS 24

INCREMENT 19

HASH TABELLEN WÄHLER 20

PDE INDEX

PDE REGISTER 23

| VIRTUELLE SEITEN ADRESSE | ZUSTAND | FOLGE | PIN CNT |
|---|---|---|---|

120

SPDE REGISTER 25

| VIRTUELLE SEITEN ADRESSE | ZUSTAND | FOLGE | PIN CNT |
|---|---|---|---|

VERGLEICHER 30

STEUERUNG 41

SUBT

ALU 40

ADD

ÜBERLAUF

33

133

34

32

35

FORCE +1

31

SEITEN ÜBERWACHUNG

235

136

237

37

138

239

39

ALARM

E/A SCHNITTSTELLE

E/A INDEX REGISTER 50

E/A STEUERUNG 60

0010198

4